# EUROPEAN PATENT SPECIFICATION

(11) **EP 3 564 149 B1**
(45) Date of publication and mention of the grant of the patent: **29.03.2023**
(21) Application number: 17886911.1
(22) Date of filing: 14.12.2017
(51) Int. Cl.: B32B 27/10, B32B 7/06, B32B 7/12, B32B 15/085, B32B 15/12, B32B 15/20, B32B 27/08, B32B 27/30, B32B 27/32, B32B 27/34, B65D 65/40

(54) **COMPOSITE PACKAGING MATERIALS, SHEET SETS AND SEALED PACKAGES**
ZUSAMMENGESETZTE VERPACKUNGSMATERIALIEN, FOLIENSETS UND VERSIEGELTE VERPACKUNGEN
MATÉRIAUX D'EMBALLAGE COMPOSITES, ENSEMBLES DE FEUILLES ET EMBALLAGES HERMÉTIQUES

(30) Priority: 30.12.2016 CN 201611271115
(43) Date of publication of application: 06.11.2019
(73) Proprietor: Cui, Ying, Beijing 100016 (CN)
(72) Inventor: Cui, Ying, Beijing 100016 (CN)
(74) Representative: Samson & Partner Patentanwälte mbB
(86) International application number: PCT/CN2017/116166
(87) International publication number: WO 2018/121276

(56) References cited:
- CN-A- 102 254 481
- CN-A- 104 555 086
- CN-A- 104 555 086
- CN-A- 104 648 817
- CN-A- 106 494 754
- CN-U- 205 264 256
- CN-U- 206 367 710
- CN-U- 206 367 710
- CN-Y- 2 731 621
- JP-B2- 5 378 016

## Description

### TECHNICAL FIELD

The present disclosure relates to the field of composite packaging materials, and particularly relates to a composite packaging material for the packaging of liquid beverages, a sheet set formed by cutting the packaging material, and a sealed package manufactured from the packaging material or the sheet set.

### BACKGROUND

Liquid foodstuffs, such as milk and yogurt, and semi-liquid foodstuffs, such as fruit juices, are usually sold in small-volume consumer-package containers. Such packaging containers are used to protect the foodstuffs in the process of transportation and treatment throughout the value chain.

Such packaging containers are formed by a continuous roll of a packaging material. The material roll may be cut to form blanks, or be longitudinally sealed to form a tube of the packaging material, then be sealed and shaped simultaneously during the filling of content, and finally be folded into the shape of the final packaging at the folding position.

Regarding liquid or semi-liquid foodstuffs, the current packaging containers are made from paper-based composite packaging materials, wherein the packaging materials have a paper fiber core and the core is surrounded by one or more layers of a barrier material, such as a polymer coating layer and/or a metal film, to obtain the composite packaging material. The barrier material is used to protect the core material from contacting with the contained product, and also protect the product from being affected by the air and moisture gas surrounding the packaging container.

In recent years, for some important commodities that relates to human health, such as foodstuffs, medicines and infant milk powders, the government has proposed clear requirements on quality system management and the establishing of source tracing information system. Products are provided with relevant identifiers, including bar codes, two-dimensional codes, digital codes and so on, as the identifiers for forgery prevention and source tracing, and consumers scan or read them by using a mobile phone to log in, to realize participating in a campaign, verifying the trueness of a commodity, tracing the source of a product, and other objects.

If not blocked, the identifier for forgery prevention and source tracing provided at the surface of the external packaging of a product may be fraudulently swiped before the product is sold very easily. In order to prevent that, a solution is to block the identifier for forgery prevention and source tracing. Such an effect can be reached by providing sequentially an isolating layer and a covering layer on the surface of the product identifier, wherein the covering layer enables the identifier to be hidden before the product is sold, and the isolating layer prevents the identifier from being broken in the process of scraping the covering layer. However, because the binding force between the isolating layer and the covering layer is relatively weak, that easily causes the separation of the isolating layer and the covering layer at the joint or the periphery, which results in bubbling at the surface of the product packaging.

CN104555086 discloses a composite packaging material having a plurality of units for forming independent packages, the composite packaging material comprising a water proofing layer, a printing layer and a base layer.

### SUMMARY

An object of the present disclosure is to solve the above technical problem, to maintain the leveling and the esthetic appearance of the surface of the external packaging of a product while better protecting the product identifier.

According to an aspect of the present disclosure, a composite packaging material is provided, having a plurality of units for forming independent packages, the composite packaging material having a water proofing layer, a printing layer and a base layer, each of the units having an identifier, and the identifiers of any two units being different, wherein each of the identifiers is covered on top by an adhering layer, an isolating layer and a covering layer sequentially, an area of the adhering layer is larger than an area of the isolating layer and an area of the covering layer, and the area of the adhering layer is smaller than the area of the water proofing layer, the composite packaging material comprises the base layer, the printing layer, the identifier, the adhering layer, the isolating layer, the covering layer and the water proofing layer from interior to exterior sequentially, a binding force between the isolating layer and the covering layer is less than a binding force between the water proofing layer and the covering layer and is less than a binding force between the isolating layer and the adhering layer and is less than a binding force between the adhering layer and the identifier, so that when under an external force the covering layer and the isolating layer are able to be separated.

According to a preferable embodiment of the present disclosure, the area of the isolating layer is not smaller than an area of the identifier and the isolating layer completely covers the identifier, and the area of the covering layer is not smaller than the area of the identifier.

According to a preferable embodiment of the present disclosure, the isolating layer partially covers the identifier and the covering layer does not directly contact with the identifier.

According to a preferable embodiment of the present disclosure, the adhering layer is acrylic resin.

According to a preferable embodiment of the present disclosure, the isolating layer is a transparent gloss oil or translucent gloss oil.

According to a preferable embodiment of the present disclosure, the covering layer is at least one layer of printed opaque printing ink.

According to a preferable embodiment of the present disclosure, the covering layer is scrapable silver ink.

According to a preferable embodiment of the present disclosure, the identifier is a lattice code, a two-dimensional code, a bar code, a numerical character string or a combination thereof.

According to a preferable embodiment of the present disclosure, the base layer is paper base.

According to a preferable embodiment of the present disclosure, the composite packaging material further comprises a gas barrier layer and a sealant layer, and the gas barrier layer and the sealant layer are configured sequentially under the base layer.

According to another aspect of the present disclosure, a sheet set is provided, comprising the above-described composite packaging material, the sheet set is formed by the units for forming independent packages of the composite packaging material.

According to yet another aspect of the present disclosure, a sealed package is provided, formed by the above-described composite packaging material or formed by the above-described sheet set.

The present disclosure, by adding the adhering layer and cladding the isolating layer and the covering layer between the water proofing layer and the adhering layer, enhances the binding forces and stability among the structural layers of the composite packaging material, to enable the product identifier to be displayed more easily, and at the same time maintains the leveling and the esthetic appearance of the surface of the composite packaging material.

### BRIEF DESCRIPTION OF DRAWINGS

The drawings explained here are intended to provide a further understanding of the present disclosure, constitute part of the present application, and do not function to limit the present disclosure. In the drawings:
Fig. 1 shows a perspective view of the composite packaging material of an embodiment of the present disclosure;
Fig. 2 shows a perspective view of the composite packaging material of an embodiment of the present disclosure;
Fig. 3 shows a schematic diagram of the cross section of the composite packaging material of another embodiment of the present disclosure;
Fig. 4 shows a schematic diagram of the cross section of the composite packaging material of yet another embodiment of the present disclosure; and
Fig. 5 shows a schematic diagram of the cross section of the composite packaging material of still another embodiment of the present disclosure.

### Reference numbers

1-units for forming independent packages
2-composite packaging material
3, 3'-identifiers
11-base layer
12-printing layer
13- identifier
14-adhering layer
15-isolating layer
16-covering layer
17-water proofing layer
18-gas barrier layer
19-sealant layer

### DETAILED DESCRIPTION

The technical means that the present disclosure employs to reach the predetermined invention objects are further described below by referring to the drawings and the preferable embodiments of the present disclosure.

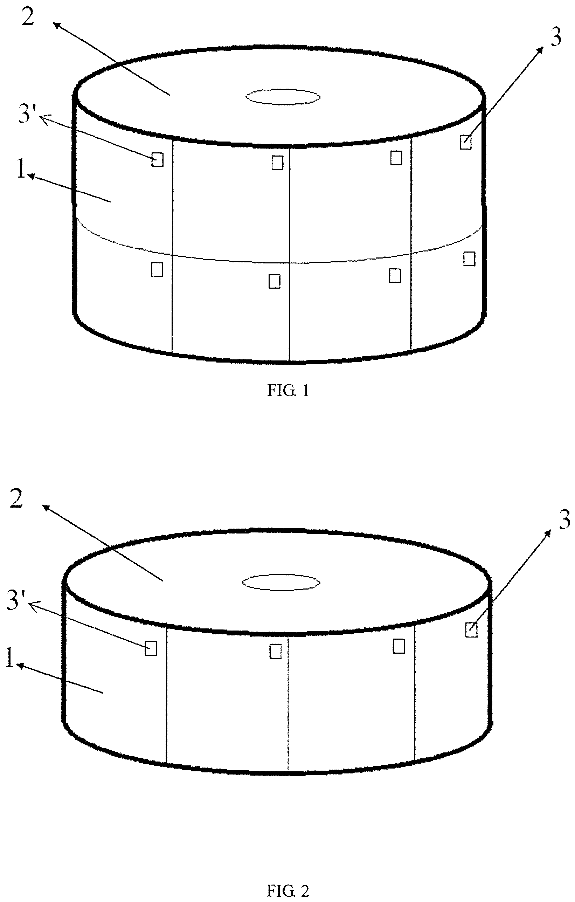

Fig. 1 shows a perspective view of the composite packaging material of an embodiment of the present disclosure. The composite packaging material 2 has a plurality of units for forming independent packages 1. Each of the units is provided with an identifier, and the identifiers of any two units are different. For example, the identifier 3 and the identifier 3' shown in Fig. 1 are located in different units, and the identifier 3 and the identifier 3' are different. In addition, in the description of the present disclosure that involves the layer structure of the composite packaging material, the description on the relative position of from top to bottom is corresponding to the description on the relative position of from exterior to interior when the composite packaging material is used for product packaging.

Fig. 2 shows a perspective view of the composite packaging material of another embodiment of the present disclosure. The composite packaging material shown in Fig. 2 may be manufactured independently, and may also be manufactured by cutting the composite packaging material shown in Fig. 1.

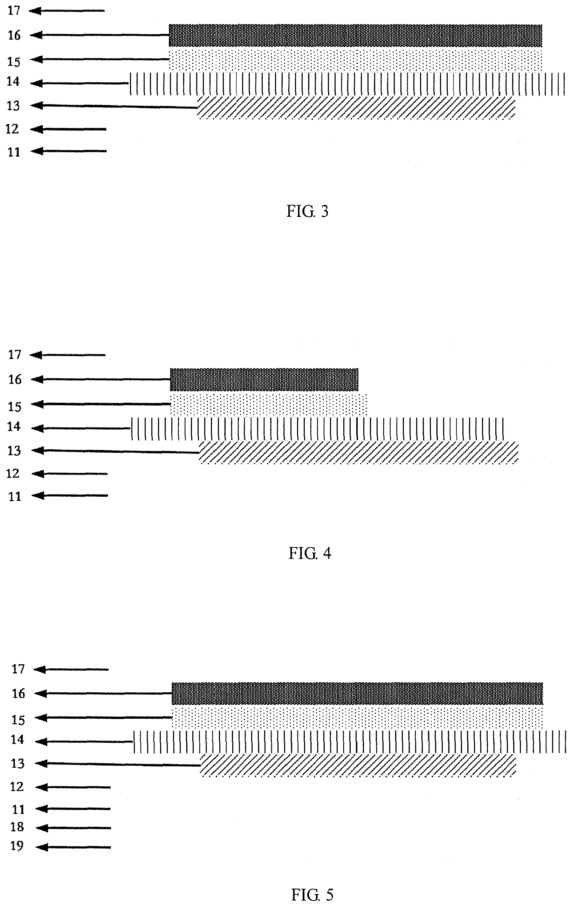

Fig. 3 shows a schematic diagram of the cross section of the composite packaging material of an embodiment of the present disclosure. The composite packaging material 2 comprises a base layer 11, a printing layer 12, an identifier 13, an adhering layer 14, an isolating layer 15, a covering layer 16 and a water proofing layer 17 from interior to exterior sequentially. The base layer 11 employs a paper-based material. The area of either the isolating layer 15 or the covering layer 16 is not smaller than the area of the identifier 13, the covering layer 16 can completely block the identifier 13, and the area of the adhering layer 14 is larger than the area of the isolating layer 15 and the area of the adhering layer 14 is larger than the area of the covering layer 16, to clad the isolating layer 15 and the covering layer 16 between the water proofing layer 17 and the adhering layer 14.

Fig. 4 shows a schematic diagram of the cross section of the composite packaging material of yet another embodiment of the present disclosure. The difference between Fig. 4 and Fig. 3 is that, the covering layer 16 merely partially blocks the identifier 13, the minimal area of the identifier 13 that is blocked by the covering layer 16 is such that by the blocking, an identifying device cannot identify the identifier 13.

Fig. 5 shows a schematic diagram of the cross section of the composite packaging material of still another embodiment of the present disclosure. The difference between Fig. 5 and Fig. 3 is that, a gas barrier layer 18 and a sealant layer 19 may be provided sequentially under the base layer 11 in Fig. 5.

In an embodiment of the present disclosure, the identifier 13 may be any one of a lattice code, a bar code, a two-dimensional code, a numerical character string or a combination of two or more of them, but is not limited thereto. The identifier 13 is formed on the surface of the printing layer 12 by spray printing, stamping or pasting.

The adhering layer 14 covers the identifier 13. The area of the adhering layer 14 is larger than the area of the isolating layer 15 and the area of the adhering layer 14 is larger than the area of the covering layer 16, to clad the isolating layer 15 and the covering layer 16 between the water proofing layer 17 and the adhering layer 14. The binding force between the adhering layer 14 and the water proofing layer 17 is greater than the binding force between the isolating layer 15 and the covering layer 16, and preferably is also greater than the binding force between the water proofing layer 17 and the printing layer 12. The binding between the adhering layer 14 and the water proofing layer 17 enhances the structural stability of the composite packaging material 2. The adhering layer 14 is prepared by precoat liquid, preferably acrylic resin emulsion. At the same time, the adding of the adhering layer 14 can also enhance the binding force between the isolating layer 15 and the identifier 13 or the printing layer 12.

The isolating layer 15 is a transparent or translucent chemical solvent or resin that is solidified over the identifier 13. The isolating layer 15 is preferably UV gloss oil. The isolating layer 15 forms a smooth compact film layer on the surface of the identifier 13, to protect the identifier 13, preventing the identifier 13 from being broken in the process of scraping the covering layer 16. The binding force between the isolating layer 15 and the covering layer 16 is less than the binding force between the water proofing layer 17 and the covering layer 16 and the binding force between the isolating layer 15 and the covering layer 16 is less than the binding force between the isolating layer 15 and the adhering layer 14 and the binding force between the isolating layer 15 and the covering layer 16 is less than the binding force between the adhering layer 14 and the identifier 13, so that when under an external force the covering layer 16 and the isolating layer 15 can be easily separated.

The covering layer 16 is at least one layer of opaque printing ink that is printed over the isolating layer 15. The opaque printing ink is preferably scrapable silver ink, and may also be another opaque aqueous printing ink. The aqueous printing ink may, by printing white ink and/or black ink for multiple times, enhance the blocking effect, or change the color of the covering layer 16, for example, by printing one layer or two layers of white printing ink on the covering layer 16, and then printing one layer of black printing ink.

The water proofing layer 17 is a thermoplastic resin, preferably polyolefin, including but not limited to low density polyethylene (LDPE), metallocene polyethylene (m-PE) or a mixture thereof. In order to facilitate scraping the covering layer 16, the thickness of the water proofing layer 17 is not more than 20 micrometers, preferably 10-15 micrometers. In the field of aseptic packaging of liquid foodstuffs, providing the water proofing layer 17 over the identifier 13, the adhering layer 14, the isolating layer 15 and the covering layer 16 not only prevent the covering layer 16 from being rubbed or unconsciously scraped off in the transportation process, but also prevent the identifier 13, the adhering layer 14, the isolating layer 15 and the covering layer 16 from contacting with the external, to ensure in the process of liquid foodstuff processing that the sterilization of the package material satisfies the requirements on sanitary safety.

Generally, the composite packaging material may also comprise the gas barrier layer 18 and the sealant layer 19. The gas barrier layer 18 and the sealant layer 19 are configured sequentially under the base layer 11. The gas barrier layer 18 includes but is not limited to an aluminum foil, ethylene-vinyl alcohol copolymer (EVOH), polyvinyl alcohol (PVOH), an inorganic oxide (for example SiO₂) or polyamide resin. The sealant layer 19 is a thermoplastic resin, preferably containing polyolefin, including but not limited to linear low density polyethylene (LLDPE), ultra low density polyethylene, low density polyethylene, and metallocene polyethylene or a mixture thereof.

The present disclosure provides a sheet set, manufactured by subjecting the above-described packaging material to printing, spray printing the identifier, coating the adhering layer, coating the isolating layer, coating the covering layer, introducing into a creasing machine to crease, punching, and introducing into a composite production line to composite with water proofing layers, and then according to the demands cutting into a coil or sheet set.

The present disclosure provides a sealed package, which is a sealed package for liquid beverages that is formed from the above-described packaging material or sheet set by steps of filling, sealing, shaping and so on.

The present disclosure is particularly suitable for the packaging of liquid beverages, but the present disclosure is not limited thereto. The present disclosure is also suitable for other products that use paper-based packaging, for example products in the fields of foodstuff and medicine.

The above-described particular embodiments describe in further detail the objects, the technical solutions and the advantageous effects of the present disclosure.

## Claims

1. A composite packaging material, having a plurality of units for forming independent packages, the composite packaging material having a water proofing layer (17), a printing layer (12) and a base layer (11), each of the units having an identifier (3, 3'), and the identifiers (3, 3') of any two units being mutually different, wherein each of the identifiers (3, 3') is covered by an adhering layer (14), an isolating layer (15) and a covering layer (16) sequentially on top, an area of the adhering layer (14) is larger than an area of the isolating layer (15) and an area of the covering layer (16), and the area of the adhering layer (14) is smaller than an area of the water proofing layer (17), to clad the isolating layer (15) and the covering layer (16) between the water proofing layer (17) and the adhering layer (14), and the binding force between the adhering layer (14) and the water proofing layer (17) is greater than the binding force between the isolating layer (15) and the covering layer (16), the composite packaging material comprises the base layer (11), the printing layer (12), the identifier (3, 3'), the adhering layer (14), the isolating layer (15), the covering layer (16) and the water proofing layer (17) sequentially from interior to exterior, a binding force between the isolating layer (15) and the covering layer (16) is less than a binding force between the water proofing layer (17) and the covering layer (16) and is less than a binding force between the isolating layer (15) and the adhering layer (14) and is less than a binding force between the adhering layer (14) and the identifier (3, 3'), so that when under an external force the covering layer (16) and the isolating layer (15) are able to be separated.

2. The composite packaging material according to claim 1, wherein the area of the isolating layer (15) is not smaller than an area of the identifier (3, 3') and the isolating layer (15) completely covers the identifier (3, 3'), and the area of the covering layer (16) is not smaller than the area of the identifier (3, 3').

3. The composite packaging material according to claim 1, wherein the isolating layer (15) partially covers the identifier (3, 3') and the covering layer (16) does not directly contact with the identifier (3, 3').

4. The composite packaging material according to any one of claims 1-3, wherein the adhering layer (14) is acrylic resin.

5. The composite packaging material according to any one of claims 1-3, wherein the isolating layer (15) is transparent gloss oil or translucent gloss oil.

6. The composite packaging material according to any one of claims 1-3, wherein the covering layer (16) is at least one layer of printed opaque printing ink.

7. The composite packaging material according to any one of claims 1-3, wherein the covering layer (16) is scrapable silver ink.

8. The composite packaging material according to any one of claims 1-3, wherein the identifier (3, 3') is a lattice code, a two-dimensional code, a bar code, a numerical character string or a combination thereof.

9. The composite packaging material according to any one of claims 1-3, wherein the base layer (11) is paper base.

10. The composite packaging material according to any one of claims 1-3, wherein the composite packaging material further comprises a gas barrier layer (18) and a sealant layer (19), and the gas barrier layer (18) and the sealant layer (19) are configured under the base layer (11) sequentially.

11. A sheet set, comprising the composite packaging material according to any one of claims 1-10, wherein the sheet set is composed by the units for forming independent packages of the composite packaging material.

12. A sealed package, formed by the composite packaging material according to any one of claims 1-10 or the sheet set according to claim 11.

## Patentansprüche

1. Verbund-Verpackungsmaterial, das mehrere Einheiten umfasst, um voneinander unabhängige Verpackungen zu bilden, wobei das Verbund-Verpackungsmaterial eine wasserundurchlässige Schicht (17), eine Druckschicht (12) und eine Basisschicht (11) umfasst, wobei jede der Einheiten eine Kennzeichnung (3, 3') hat und die Kennzeichnungen (3, 3') von beliebigen zwei Einheiten voneinander verschieden sind, wobei jede der Kennzeichnungen (3, 3') von einer Haftschicht (14), einer Isolierschicht (15) und einer Deckschicht (16) sequenziell übereinander überdeckt ist und wobei eine Fläche der Haftschicht (14) größer ist als eine Fläche der Isolierschicht (15) und eine Fläche der Deckschicht (16), und wobei die Fläche der Haftschicht (14) kleiner ist als eine Fläche der wasserundurchlässigen Schicht (17), um die Isolierschicht (15) und die Deckschicht (16) zwischen der wasserundurchlässigen Schicht (17) und der Haftschicht (14) zu ummanteln, wobei die Bindungskraft zwischen der Haftschicht (14) und der wasserundurchlässigen Schicht (17) größer ist als die Bindungskraft zwischen der Isolierschicht (15) und der Deckschicht (16), wobei das Verbund-Verpackungsmaterial sequenziell von innen nach außen die Basisschicht (11), die Druckschicht (12), die Kennzeichnung (3, 3'), die Haftschicht (14), die Isolierschicht (15), die Deckschicht (16) und die wasserundurchlässige Schicht (17) umfasst und wobei eine Bindungskraft zwischen der Isolierschicht (15) und der Deckschicht (16) geringer ist als eine Bindungskraft zwischen der wasserundurchlässigen Schicht (17) und der Deckschicht (16) und geringer ist als eine Bindungskraft zwischen der Isolierschicht (15) und der Haftschicht (14) und geringer ist als eine Bindungskraft zwischen der Haftschicht (14) und der Kennzeichnung (3, 3'), derart, dass unter einer äußeren Kraft die Deckschicht (16) und die Isolierschicht (15) voneinander getrennt werden können.

2. Verbund-Verpackungsmaterial nach Anspruch 1, wobei die Fläche der Isolierschicht (15) nicht kleiner ist als eine Fläche der Kennzeichnung (3, 3') und die Isolierschicht (15) die Kennzeichnung (3, 3') vollständig überdeckt, und wobei die Fläche der Deckschicht (16) nicht kleiner ist als die Fläche der Kennzeichnung (3, 3').

3. Verbund-Verpackungsmaterial nach Anspruch 1, wobei die Isolierschicht (15) die Kennzeichnung (3, 3') teilweise überdeckt und die Deckschicht (16) keinen direkten Kontakt mit der Kennzeichnung (3, 3') hat.

4. Verbund-Verpackungsmaterial nach einem der Ansprüche 1 bis 3, wobei die Haftschicht (14) ein Acrylharz ist.

5. Verbund-Verpackungsmaterial nach einem der Ansprüche 1 bis 3, wobei die Isolierschicht (15) aus durchsichtigem Glanzöl oder lichtdurchlässigem Glanzöl besteht.

6. Verbund-Verpackungsmaterial nach einem der Ansprüche 1 bis 3, wobei die Deckschicht (16) aus wenigstens einer Schicht aus gedruckter opaker Druckerfarbe besteht.

7. Verbund-Verpackungsmaterial nach einem der Ansprüche 1 bis 3, wobei die Deckschicht (16) aus abkratzbarer Silberfarbe besteht.

8. Verbund-Verpackungsmaterial nach einem der Ansprüche 1 bis 3, wobei die Kennzeichnung (3, 3') aus einem Gittercode, einem zweidimensionalen Code, einem Strichcode, einer numerische Zeichenkette oder einer Kombination aus diesen besteht.

9. Verbund-Verpackungsmaterial nach einem der Ansprüche 1 bis 3, wobei die Basisschicht (11) aus einer Papierbasis besteht.

10. Verbund-Verpackungsmaterial nach einem der Ansprüche 1 bis 3, wobei das Verbund-Verpackungsmaterial außerdem eine Gassperrschicht (18) und eine versiegelnde Schicht (19) umfasst und wobei die Gassperrschicht (18) und die versiegelnde Schicht (19) sequenziell unter der Basisschicht (11) eingerichtet sind.

11. Folienset, das das Verbund-Verpackungsmaterial nach einem der Ansprüche 1 bis 10 umfasst, wobei das Folienset aus den Einheiten besteht, um aus dem Verbund-Verpackungsmaterial voneinander unabhängige Verpackungen zu bilden.

12. Dichte Verpackung, die aus dem Verbund-Verpackungsmaterial nach einem der Ansprüche 1 bis 10 oder dem Folienset nach Anspruch 11 gebildet ist.

## Revendications

1. Matériau d'emballage composite ayant une pluralité d'unités pour former des emballages indépendants, le matériau d'emballage composite ayant une couche d'imperméabilisation (17), une couche d'impression (12) et une couche de base (11), chacune des unités ayant un dispositif d'identification (3, 3') et les dispositifs d'identification (3, 3') de l'une quelconque des deux unités étant mutuellement différents, dans lequel chacun des dispositifs d'identification (3, 3') est recouvert par une couche adhésive (14), une couche d'isolation (15) et une couche de recouvrement (16) séquentiellement sur le dessus, une zone de la couche adhésive (14) est supérieure à une zone de la couche d'isolation (15) et une zone de la couche de recouvrement (16) et la zone de la couche adhésive (14) est inférieure à une zone de la couche d'imperméabilisation (17), pour recouvrir la couche d'isolation (15) et la couche de recouvrement (16) entre la couche d'imperméabilisation (17) et la couche adhésive (14) et la force de liaison entre la couche adhésive (14) et la couche d'imperméabilisation (17) est supérieure à la force de liaison entre la couche d'isolation (15) et la couche de recouvrement (16), le matériau d'emballage composite comprend la couche de base (11), la couche d'impression (12), le dispositif d'identification (3, 3'), la couche adhésive (14), la couche d'isolation (15), la couche de recouvrement (16) et la couche d'imperméabilisation (17) de manière séquentielle de l'intérieur vers l'extérieur, une force de liaison entre la couche d'isolation (15) et la couche de recouvrement (16) est inférieure à une force de liaison entre la couche d'imperméabilisation (17) et la couche de recouvrement (16) et est inférieure à une force de liaison entre la couche d'isolation (15) et la couche adhésive (14) et est inférieure à une force de liaison entre la couche adhésive (14) et le dispositif d'identification (3, 3'), de sorte que sous une force externe, la couche de recouvrement (16) et la couche d'isolation (15) peuvent être séparées.

2. Matériau d'emballage composite selon la revendication 1, dans lequel la zone de la couche d'isolation (15) n'est pas inférieure à une zone du dispositif d'identification (3, 3') et la couche d'isolation (15) recouvre complètement le dispositif d'identification (3, 3'), et la zone de la couche de recouvrement (16) n'est pas inférieure à la zone du dispositif d'identification (3, 3').

3. Matériau d'emballage composite selon la revendication 1, dans lequel la couche d'isolation (15) recouvre partiellement le dispositif d'identification (3, 3') et la couche de recouvrement (16) n'est pas directement en contact avec le dispositif d'identification (3, 3').

4. Matériau d'emballage composite selon l'une quelconque des revendications 1 à 3, dans lequel la couche adhésive (14) est une résine acrylique.

5. Matériau d'emballage composite selon l'une quelconque des revendications 1 à 3, dans lequel la couche d'isolation (15) est un vernis à base d'essence transparent ou un vernis à base d'essence translucide.

6. Matériau d'emballage composite selon l'une quelconque des revendications 1 à 3, dans lequel la couche de recouvrement (16) est au moins une couche d'encre d'impression opaque imprimée.

7. Matériau d'emballage composite selon l'une quelconque des revendications 1 à 3, dans lequel la couche de recouvrement (16) est de l'encre argentée pouvant être raclée.

8. Matériau d'emballage composite selon l'une quelconque des revendications 1 à 3, dans lequel le dispositif d'identification (3, 3') est un code de réseau, un code bidimensionnel, un code à barres, une chaîne de caractères numériques ou leur combinaison.

9. Matériau d'emballage composite selon l'une quelconque des revendications 1 à 3, dans lequel la couche de base (11) est une base de papier.

10. Matériau d'emballage composite selon l'une quelconque des revendications 1 à 3, dans lequel le matériau d'emballage composite comprend en outre une couche de barrière au gaz (18) et une couche de scellement (19), et la couche de barrière au gaz (18) et la couche de scellement (19) sont configurées sous la couche de base (11) de manière séquentielle.

11. Ensemble de feuilles, comprenant le matériau d'emballage composite selon l'une quelconque des revendications 1 à 10, dans lequel l'ensemble de feuilles est composé par les unités pour former des emballages indépendants du matériau d'emballage composite.

12. Emballage étanche formé par le matériau d'emballage composite selon l'une quelconque des revendications 1 à 10 ou l'ensemble de feuilles selon la revendication 11.
